# FASCICULE DE BREVET EUROPEEN

(11) **EP 1 980 137 B1**
(45) Date de publication et mention de la délivrance du brevet: **05.03.2014**
(21) Numéro de dépôt: 07718206.1
(22) Date de dépôt: 19.01.2007
(51) Int. Cl.: H05B 3/84

(54) **VITRAGE TRANSPARENT MUNI D'UN SYSTEME STRATIFIE CHAUFFANT**
TRANSPARENTE VERGLASUNG MIT LAMINIERTEM HEIZSYSTEM
TRANSPARENT GLAZING PROVIDED WITH LAMINATED HEATING SYSTEM

(30) Priorité: 19.01.2006 DE 102006002636
(43) Date de publication de la demande: 15.10.2008
(73) Titulaire: Saint-Gobain Glass France S.A., 92400 Courbevoie (FR)
(72) Inventeur: BLANCHARD, Ariane, D-52074 Aachen (DE); SCHALL, Günther, 52372 KROUZAU (DE)
(74) Mandataire: Jamet, Vincent
(86) Numéro de dépôt international: PCT/FR2007/000112
(87) Numéro de publication internationale: WO 2007/083038

(56) Documents cités:
- EP-A1- 0 025 755
- WO-A-2006/040498

## Description

L'invention se rapporte à un vitrage transparent muni d'un système de couches stratifié résistif réalisant un revêtement chauffant électriquement possédant les caractéristiques du préambule de la revendication 1.

L'invention se rapporte plus particulièrement à un vitrage dont le revêtement chauffant résistif est un revêtement disposé sur un substrat et présentant des capacités d'isolation thermique et/ou de protection solaire. Les vitrages intégrant ce type de revêtement, lorsqu'ils sont destinés à équiper les véhicules, en permettent notamment de diminuer l'effort de climatisation et/ou de réduire une surchauffe excessive (vitrages dits « de contrôle solaire ») et/ou diminuer la quantité d'énergie dissipée vers l'extérieur (vitrages dits « bas émissifs ») entraînés par l'importance toujours croissante des surfaces vitrées dans les habitacles de véhicules.

Un type d'empilement de couches connu pour conférer aux substrats de telles propriétés est constitué d'au moins deux couches métalliques, comme une couche à base d'argent, qui se trouve disposée chacune entre deux revêtements en matériau diélectrique. Cet empilement est généralement obtenu par une succession de dépôts effectués par une technique utilisant le vide comme la pulvérisation cathodique éventuellement assistée par champ magnétique. Peuvent aussi être prévues deux couches métalliques très fines appelées « couches de blocage », disposées sous, sur ou de chaque côté de chaque couche d'argent, la couche sous-jacente en tant que couche d'accrochage, de nucléation et/ou de protection lors d'un éventuel traitement thermique postérieurement au dépôt, et la surcouche en tant que couche de protection ou « sacrificielle » afin d'éviter l'altération de l'argent si la couche d'oxyde qui la surmonte est déposée par pulvérisation cathodique en présence d'oxygène et/ou si l'empilement subit postérieurement au dépôt un traitement thermique.

Il existe notamment une demande importante de la part du marché pour des versions chauffantes des pare-brises pour véhicules, les moyens de chauffage en tant que tels devant être le moins perceptible ou le moins gênant possible sur le plan visuel. Un revêtement transparente chauffant des vitrages est donc de plus en plus demandé.

Un problème général des systèmes de couches stratifiés chauffants à faible absorption de la lumière est sa résistance surfacique relativement élevée qui nécessite une tension de service élevée, laquelle est en tout cas supérieure aux tensions de bord habituelles des véhicules, en tout cas dans le cas de dimensions élevées du vitrage à chauffer ou en présence de longs trajets du courant. Avec les systèmes stratifiés existants, une réduction de la résistance surfacique serait accompagnée d'une diminution de la transmission de la lumière visible, car les couches (partielles) conductrices devraient être plus épaisses.

Ce sont les raisons techniques pour lesquelles sont encore parfois préférés des vitrages chauffées par fils qui peuvent sans difficultés être alimentées avec la tension de bord habituelle. Mais ces vitrages composites à zones chauffantes intégrées constituées de fils très minces (quelques micromètres d'épaisseur seulement) ne sont pas acceptées par tous les clients. De plus, leur fabrication est relativement complexe.

Le brevet DE 1 256 812 B1 décrit un vitrage en verre qui peut être chauffée au moyen d'une couche électriquement conductrice en métal ou en oxyde métallique plane appliquée sur sa surface. Cette publication avec priorité de déclaration de 1963 suppose une résistance de couche très élevée de 200 Ω/unité de surface. Pour pouvoir tout de même chauffer cette couche de manière homogène avec une tension relativement faible par le biais de deux barres conductrices latérales de faible résistance, on prévoit d'étroites électrodes en peigne de faible résistance imprimées qui s'étendent depuis ces derniers sur tout le champ de vision du vitrage. Ces peignes sont à polarités alternées entre eux. Ils ne se terminent respectivement qu'à une faible distance de la barre conductrice opposée. Il est vrai que grâce à cela, le courant de chauffage dans le sens transversal par rapport à la projection longitudinale des lignes individuelles des électrodes en peigne ne doit parcourir qu'un trajet relativement court à l'intérieur de la couche.

L'avantage qui y est mentionné en comparaison des vitrages qui ne sont chauffées qu'à l'aide d'étroits conducteurs chauffants imprimés est la puissance de chauffe homogène avec des écarts mutuels relativement élevés entre les électrodes en peigne.

Lesdites lignes de type hachure gênent cependant la transparence et l'effet visuel du champ de vision général du vitrage ainsi réalisé. L'avantage visuel d'une couche chauffante transparente reste inexploité. Ce vitrage est seulement prévue comme lunette arrière pour les automobiles. Il n'est actuellement pas autorisé pour une utilisation en tant que pare-brise, car il ne doit exister dans celui-ci aucune gêne de la visibilité dans un champ de vision principal normalisé dit « champ de vision A ».

Un autre problème avec les revêtements chauffant peut résulter du fait qu'ils ne peuvent parfois pas être appliqués de manière homogène sur toute la surface de la vitre transparente sur laquelle ils sont déposés, mais qu'il faut prévoir dans celle-ci une ou plusieurs interruptions, des fenêtres dites « de communication » qui affectent le flux du courant de chauffage et provoquent éventuellement la formation de « points chauds » (surchauffes locales) au niveau de leurs bords. De telles fenêtres de communication servent à rendre le revêtement, qui en lui-même réfléchit les rayonnements à ondes courtes ou infrarouges, localement plus perméable pour certains flux ou signaux d'informations.

Au moins une paire d'électrodes (en forme de bandes) ou de barres conductrices (également appelés « barres bus ») qui doivent injecter le plus régulièrement possible les courants dans la surface stratifiée et les distribuer sur une façade plus large est prévue pour injecter et évacuer le courant de chauffage dans de tels revêtements. Dans le cas des vitrages pour véhicules qui sont considérablement plus larges que hautes, les barres conductrices se trouvent généralement le long des bords les plus longs (en haut et en bas en position de montage) du vitrage de sorte que le courant de chauffage puisse parcourir le chemin le plus court sur la hauteur du vitrage. En même temps, les fenêtres de communication mentionnées se trouvent généralement au niveau du bord supérieur du vitrage et s'y étendent sur plusieurs centimètres de largeur.

Le document WO 00/72 635 A1 décrit un substrat transparent muni d'un revêtement réfléchissant les IR et d'une fenêtre de communication réalisée par enlèvement superficiel ou omission du revêtement.

Toute fenêtre de communication qui modifie l'homogénéité du revêtement représente visiblement une perturbation des flux de courant. Il se produit des pointes de température locale (« points chauds ») qui peuvent provoquer des dommages au substrat (contraintes thermiques) et au revêtement lui-même. Cela n'est pas seulement le cas lorsque le revêtement est absent sur une grande surface, mais également lorsque la fenêtre de communication est formée par un nombre plus ou moins élevé de fente individuelles non rattachées. Celles-ci produisent elles aussi dans la zone concernée de la surface une augmentation notable de la résistance de la couche et laissent en même temps aussi se produire les points chauds mentionnés.

Le dernier document mentionné propose comme mesure pour réduire l'effet perturbateur de la fenêtre de communication de grande surface de prévoir au bord de celle-ci une bande conductrice d'électricité qui possède une résistance ohmique par unité de surface considérablement plus faible que celle du revêtement chauffant. Cette bande doit dériver les courants autour de la découpe. Une fenêtre de communication est de préférence entièrement encadrée par une telle bande. La bande peut être fabriquée par impression et cuisson d'une pâte de sérigraphie conductrice contenant de l'argent. Mais elle peut également être posée en appliquant un verni électriquement conducteur ou en déposant une bande métallique. Dans tous les cas, une liaison électriquement conductrice de la bande avec le revêtement est bien évidemment nécessaire pour le fonctionnement.

La bande peut être dissimulée visuellement en superposant une bande de masquage opaque non conductrice d'électricité, par exemple en émail noir. De telles bandes de masquage se composent généralement d'un matériau non conducteur coloré en noir et pouvant être cuit (pâte de sérigraphie). Le rayonnement infrarouge n'est pas réfléchi par ce matériau, mais absorbé.

Le brevet DE 103 33 618 B3 décrit un vitrage transparent muni d'un revêtement chauffant dans lequel est aménagée une fenêtre de communication. Pour court-circuiter celle-ci électriquement pour le courant de chauffage, il est prévu un enrobage raccordé directement à l'un des conducteurs commun dans un matériau dont la résistance ohmique est inférieure à la résistance surfacique du revêtement chauffant. L'enrobage s'étend uniquement le long d'une partie de la barre conductrice. Il est fabriqué dans un matériau opaque, de préférence imprimable, qui présente un certain nombre de fentes ou d'autres évidements.

Le brevet DE 198 29 151 C1 décrit un procédé pour l'établissement du contact électrique avec un système de couches minces conducteur sur une vitre en verre avec lequel, pour contourner la résistance élevée, une couche de protection diélectrique du système stratifié est réalisée à l'aide du soudage aux ultrasons de points de contact entre les barres conductrices et la couche conductrice proprement dite.

Le brevet WO 03/024 155 A2 expose à cet effet un vitrage transparent muni d'un revêtement chauffant pour lequel il est indiqué une tension de service maximale de 42 V, mais qui essaie aussi de résoudre le problème des « points chauds » au niveau des bords d'une fenêtre de communication. Plusieurs niveaux de tension différents sont généralement utilisés, une tension plus faible étant appliquée aux trajets de courant plus courts (par exemple du fait de la fenêtre de communication) afin d'éviter les surchauffes locales. La zone de la fenêtre de communication est spécialement non recouverte dans la surface chauffante en posant une barre conductrice spéciale entre la fenêtre de communication et la barre conductrice qui se trouve à l'opposé.

Un grand nombre d'exemple destinés à subdiviser les revêtements chauffants d'un pare-brise de véhicule est en outre connu du brevet DE 36 44 297 A1. Selon lui, les subdivisions peuvent être réalisées par des sections planes exemptes de couches et/ou par des entailles aménagées de manière mécanique ou par rayon laser. Elles servent au réglage ciblé et à la déviation d'un flux de courant à l'intérieur de la surface revêtue et doivent garantir une densité de courant la plus régulière possible dans les surfaces concernées.

Le brevet WO 2004/032569 A2 fait connaître une autre configuration d'une vitre transparente munie d'un revêtement chauffant qui cherche elle aussi une homogénéisation de la puissance de chauffe dans la surface par des lignes de séparation intégrées dans le revêtement.

Le brevet DE 29 36 398 A1 se consacre à des mesures destinées à éviter les pointes de courant au niveau de la transition entre les barres conductrices et le revêtement sur une vitre transparente munie d'un revêtement chauffant. Le principal objectif est de réduire l'énorme différence de résistance entre le revêtement et les barres conductrices en utilisant des matériau ou des formes à résistivité supérieure pour ces derniers ou encore à l'aide de résistances intermédiaires. Des résistances superficielles comprises entre 1 et 10 ohms par unité de surface y sont indiquées pour le revêtement. Dans une variante de solution parmi plusieurs qui y sont décrites, le bord de chaque barre conductrice dirigée vers la barre conductrice opposée est de forme ondulée. Il s'agit ici d'éviter la formation de pointes dirigées vers le revêtement chauffant. Cette base a pour objectif de rechercher une prolongation notable de la ligne de transition entre la barre conductrice et le revêtement et ainsi une réduction de la densité de courant dans cette transition. Toutes ces mesures semblent cependant peu appropriées pour alimenter la couche chauffante avec une tension relativement faible.

Il est également connu de prévoir sur le côté de l'incidence de la lumière de cellules solaires photovoltaïques des électrodes dites en grille ou en peigne (voir par exemple WO 03/075 351 A1). Elles sont fréquemment réalisées par sérigraphie et se composent d'une barre conductrice disposés sur le bord de la cellule solaire et d'une pluralité de dents de peigne très étroites qui s'étendent sur la surface de la cellule solaire en partant de la barre conductrice. Elles permettent un prélèvement en surface de la tension photovoltaïque qui est appliquée sur les deux côtés de la surface dé l'absorbeur ou entre l'électrode en peigne du côté frontal et l'électrode arrière métallique recouvrant toute la surface, et ce sans réduire fortement la pénétration de la lumière dans l'absorbeur.

Le brevet DE 197 02 448 A1 publie un miroir chauffant sur le corps en verre duquel sont disposées deux bandes conductrices ou électrodes réalisées en forme de peigne et engrenées l'une dans l'autre avec un revêtement à CTP qui les recouvre et qui remplit les espaces intermédiaires entre les dents des peignes. Le problème de la configuration non perceptible visuellement du chauffage ne se pose cependant pas ici, car les pistes conductrices et la couche chauffante peuvent se trouver derrière la couche réfléchissante.

Le brevet DE 198 32 228 A1 décrit une vitre de véhicule munie d'un revêtement visuellement transparent électriquement conducteur et utilisé comme antenne. Des signaux radioélectriques à haute fréquence sont prélevés de la couche d'antenne de façon purement capacitive au moyen d'une électrode de couplage qui se compose de plusieurs minces fils reliés entre eux, lesquels sont disposés en parallèle les uns des autres avec un écart élevé par rapport à leur diamètre, s'étendent depuis le bord vers l'intérieur du champ de vision de la vitre et s'y terminent en cul-de-sac. Il n'existe aucun couplage galvanique entre le revêtement et ces fils, car ils sont respectivement disposés dans des plans différents du verre composite. Les fils de l'électrode de couplage peuvent être appliqués sur la surface de la vitre au moyen d'un film de transfert. Cette dernière opération est décrite plus en détails dans le brevet DE 43 32 320 C1.

Les barres conductrices déjà mentionnées plusieurs fois peuvent être réalisées aussi bien par impression ou sérigraphie avant ou après l'application du revêtement sur la vitre que par soudage de minces bandes métalliques, de préférence en cuivre (étamé). Il existe également des combinaisons de barres conductrices imprimées et en bande métallique (voir par exemple DE 198 29 151 C1). Il est vrai que les barres conductrices sont généralement réalisées en forme de bande et étroits, mais elles ne sont pas transparentes. Par conséquent, pour des raisons optiques, elles sont à chaque fois disposées à proximité du bord extérieur des vitres transparentes concernées. Elles peuvent généralement être dissimulées par des revêtements de bordure opaques (qui sont eux aussi généralement réalisés par sérigraphie). Les fenêtres de communication évoquées peuvent elles aussi être dissimulées par ces revêtements de bordure, sous réserve que ces derniers soient suffisamment perméables au rayonnement à transmettre.

Sur les pare-brises traditionnels des véhicules, ces revêtements opaques sont réalisés sous la forme d'un cadre périphérique dont une fonction supplémentaire est la protection contre les rayons UV de l'assemblage collé entre le vitrage et la carrosserie. Ces cadres décrivent le champ de vision général ou global du vitrage. Dans le cas des pare-brises, on distingue encore en plus un champ de vision principal A au centre de la surface du vitrage dans lequel il ne doit exister absolument aucune gêne à la visibilité (par exemple colorations, fils ou aussi dommages) et le champ de vision secondaire B qui est plus près du bord.

L'invention a pour objet de réaliser un vitrage transparent muni d'un revêtement transparent chauffant qui peut fonctionner avec des tensions de service relativement faibles (de l'ordre de 12 V) en affectant peu la transparence et qui garantit tout de même une distribution homogène de la chaleur.

Conformément à l'invention, cet objet est réalisé par les caractéristiques de la revendication 1. Les caractéristiques des revendications secondaires indiquent des perfectionnements avantageux de cette invention.

Le vitrage transparent selon l'invention est muni du revêtement chauffant, résistif, qui s'étend sur une partie importante d'une surface du vitrage, notamment sur un champ de vision principal (A) et qui est relié électriquement au moins indirectement avec au mois deux barres conductrices de telle sorte que lors de l'application d'une tension d'alimentation électrique entre les deux barres conductrices, un courant circule entre les barres conductrices en chauffant un champ de chauffage dans ledit revêtement chauffant. Le champ de chauffage comporte au moins une zone semi-résistive en contact direct avec au moins une barre conductrice et comportant des brins conducteurs réalisés sous la forme de minces fils longitudinaux dont la résistance ohmique est inférieure à celle du revêtement chauffant.

Selon l'invention, au moins un brin conducteur de la zone semi-résistive comporte une structure conductrice transversale en contact électrique avec ladite zone semi-résistive et donc, directement ou indirectement avec le revêtement chauffant. Cette structure conductrice s'étend transversalement au fil longitudinal du brin conducteur auquel elle est raccordé électriquement. Cette structure conductrice transversale est, de préférence, positionnée à l'extrémité du brin conducteur la plus éloignée de la barre conductrice à laquelle est connecté le brin conducteur ; Toutefois, elle peut ne pas être à cette extrémité, mais avant cette extrémité, en direction de la barre conductrice à laquelle est connecté le brin conducteur.

Dans une variante, cette structure conductrice transversale est en outre, de préférence, en contact électrique avec plusieurs brins conducteur.

Ladite zone semi-résistive peut par ailleurs, comporter plusieurs structures conductrices transversales.

Une (ou plusieurs) structure(s) conductrice(s) transversale(s) peut (ou peuvent) être en forme de ligne(s), en utilisant des fils électriques, notamment des fils. de tungstène et/ou de bande(s), notamment de bande(s) de cuivre et notamment de bande(s) de cuivre étamées.

Il est connu que les systèmes de couches minces stratifiés chauffants courants fortement transparents possèdent au moins une couche conductrice métallique encadrée par une ou des couches de protection diélectriques (couches antireflet ou anti-réflexion) qui sont en elles-mêmes non ou mauvaises conductrices d'électricité et peuvent gêner les courants transversaux au plan des couches, et ce même si elles n'ont que quelques nanomètres d'épaisseur.

C'est la raison pour laquelle, il est en outre proposé une solution permettant d'améliorer le passage du courant vers la couche conductrice du revêtement chauffant.

Dans ce qui suit, il ne sera toujours fait mention que d'une couche conductrice sans vouloir pour autant exclure du domaine d'application de l'invention les systèmes de couches stratifiés munis de plusieurs couches partielles conductrices. Ces couches partielles sont généralement métalliques et le plus souvent à base d'argent. L'invention peut cependant en principe être réalisée avec tout type de revêtement chauffant monocouche conductrice transparente ou à empilement de couche(s) conductrice(s) et diélectriques et transparentes ou rendues transparentes. La couche de diélectrique peut elle aussi être multicouche en elle-même ; mais pour des raisons de simplification il ne sera là aussi toujours question que d'une seule couche de diélectrique sans vouloir exclure les couches multiples.

Il est vrai qu'il est techniquement possible de déposer le système stratifié chauffant sur une vitre déjà dotée des fils appliqués. Un contact électrique suffisant entre la couche conductrice relativement mince et les fils électriques peut être obtenu avec une grande certitude. Mais cette procédure exige un effort accru non justifiable au niveau industriel, car dans tous les cas les substrats ne peuvent plus être revêtus sur une grande surface pour ensuite être découpés, mais le revêtement doit être déposé sur les substrats déjà finalisés.

Dans une solution pratique, les fils appliqués sur le système stratifié existant peut être mis en contact d'une manière certaine avec la couche conductrice en transperçant ladite couche diélectrique au niveau de points de contact afin de garantir une circulation de courant fiable entre le fil et le système stratifié.

Comme le vitrage transparent est réalisé sous la forme préférentielle d'un vitrage composite, le système stratifié lui-même étant disposé sur une surface à l'intérieur du composite, les minces fils se trouvent à l'intérieur du composite en étant eux aussi protégés. Ils sont, par exemple fixée d'une manière connue sur un film adhésif composite ou sur un film de transfert ou sur une feuille adhésive puis appliqués sur le revêtement chauffant.

Les points de contact sont, de préférence, appliqués de telle sorte que le courant de chauffage doit parcourir des trajets les plus courts possible sur le système stratifié chauffant, c'est-à-dire généralement à l'extrémité extérieure des fils ou le plus loin possible des barres conductrices qui s'étendent le long du bord du vitrage. Mais cela n'exclut pas de prévoir également des points de contact plus près des barres conductrices ou de munir les fils de plusieurs points de contact vers la couche conductrice.

Les éléments conducteurs en forme de fils se terminent en cul-de-sac avant les limites du champ de vision principal A ; ils peuvent également être posés en forme de boucles. Contrairement au brevet DE 1 256 812, il n'existe pas d'éléments conducteurs à polarité inverse qui s'engrènent. Dans la zone du champ de vision et de chauffage central, le courant, après avoir appliqué la tension, circule pour l'essentiel dans le sens normal par rapport aux conducteurs commun ou parallèlement à la projection longitudinale globale des brins conducteurs se terminant en cul-de-sac. L'expression « projection longitudinale globale » désigne ici la direction générale dans laquelle ils s'étendent à l'intérieur du champ chauffant en partant des barres conductrices, et ce indépendamment de leur forme concrète.

Ces caractéristiques et dispositions permettent d'obtenir un raccourcissement relatif du trajet du flux de courant à l'intérieur du revêtement chauffant à résistance relativement élevée, car une partie de la distance entre les barres conductrices proprement dites et le champ chauffant principal central est court-circuitée par des sections de fil réalisées sous la forme de conducteurs auxiliaires à résistance (relativement) faible. Cela peut également être considéré comme un rapprochement électrique mutuel des barres conductrices.

Mais le champ de vision principal A (central) proprement dit du vitrage n'est pas perturbé ici. Les zones occupées par les éléments conducteurs ou surfaces conductrices autres que le revêtement chauffant ne recouvrent qu'une partie (du côté du bord) du champ chauffant le long des barres conductrices.

Plusieurs options sont offertes pour réaliser les points de contact entre les fils et la couche conductrice et favoriser ainsi le passage du courant. On peut laisser les fils transpercer la couche diélectrique par un effet mécanique (frottement, oscillation, effet des ultrasons). Au niveau du procédé, cela peut être obtenu par une pression mécanique sur le point du fil avec lequel établir le contact contre le revêtement en initiant simultanément une oscillation (à haute fréquence).

Une autre option consiste à prévoir au niveau des points de contact un matériau conducteur supplémentaire à faible résistance électrique qui est en contact avec la couche conductrice et traverse la couche de protection diélectrique en direction des fils de manière à ce que ce matériau forme un pont conducteur entre le fil correspondant et la couche conductrice. Aucun contact direct entre le fil et la couche conductrice n'est alors nécessaire.

Le matériau conducteur supplémentaire peut être appliqué de préférence par sérigraphie, mais aussi par n'importe quelle autre technique telle que l'impression par jets d'encre, la photolithographie, etc., les techniques à préférer étant celles avec lesquelles le matériau appliqué est le moins perceptible possible sur le plan visuel.

Contrairement aux couches minces du système stratifié chauffant, le matériau supplémentaire ne peut actuellement être appliqué que par la technique des couches épaisses avec des proportions de matériau élevées, ce qui rend illusoire de vouloir rendre ces applications de matériau elles-mêmes transparentes ou même complètement invisibles. Par conséquent, elles seront produites avec une épaisseur de couche ou une épaisseur de point la plus faible possible. Elles n'ont pas non plus besoin d'être trop surélevées par rapport à la surface général du système stratifié, mais seulement de manière à ce qu'elles puissent avec certitude être mises en contact avec les fils.

Une autre option pour l'établissement de contacts ponctuels entre les fils et la couche conductrice est une sorte de sandwich avec lequel le fil est coincé entre les sections d'une bande de film de base et d'une bande de film protecteur. La bande de film de base peut être reliée avec la couche conductrice de manière connue par soudage aux ultrasons et la bande de film protecteur est ensuite soudée sur celle-ci.

Conformément à l'invention, les fils peuvent être posés en une pose simple ou en boucle avec des tracés droits, cintrés ou ondulés, un film de transfert connu en lui-même pouvant être utilisé pour leur dépose sur le système stratifié.

Dans une forme de réalisation avantageuse de l'invention, il peut s'avérer judicieux de configurer les applications de matériau supplémentaire non seulement sous la forme de points de contact ponctuels, mais également sous la forme de distributeurs de courant. Il faut interpréter cela en ce que le matériau lui-même s'étend au-delà du point de contact proprement dit avec le fil et forme une barre conductrice miniature avec laquelle le courant peut être transféré dans le système stratifié ou prélevé de celui-ci sur un front élargi.

Dans un autre développement de cette variante, des ponts en matériau supplémentaire peuvent également relier électriquement entre eux des fils qui se trouvent les uns à côté des autres. Les étendues transversales des bandes de matériau supplémentaire qui en résultent et qui sont grandes par rapport aux épaisseurs des fils (quelques micromètres) peuvent éventuellement être dissimulées au moyen de bandes opaques ou teintées avec suffisamment de discrétion, à moins qu'elles ne soient elles-mêmes suffisamment discrètes pour ne pas être gênantes.

En plus de cela, il est bien évidemment aussi possible de combiner les conducteurs chauffants filaires avec d'autres mesures pour raccourcir électriquement la distance électrique entre les barres conductrices si l'une d'entre-elles ne suffit pas à elle seul à assurer la réussite souhaitée ou si d'autres réflexions ou contraintes le rendent nécessaire.

Les zones en forme de bandes du revêtement recouvertes par les fils peuvent ainsi être réalisées avec une conductivité supérieure. Une telle conductivité localement accrue peut être obtenue, par exemple, par des épaisseurs de couche(s) conductrice(s) plus élevées dans un système existant ou en ajoutant localement des couches conductrices / métalliques supplémentaires. L'expérience montre cependant que cela s'accompagne d'une légère diminution de la transmission de la lumière. Dans le cas des pare-brises pour véhicules, ces zones en forme de bande s'étendraient elles aussi au maximum jusqu'à la limite du champ de vision central afin d'y garantir la transmission élevée de la lumière requise et préconisée (75 % de la lumière visible).

Il est en outre envisageable d'utiliser la couche intermédiaire adhésive d'un vitrage composite pour la diminution locale de la résistance conforme à l'invention. Pour ce faire, celle-ci doit être rendue électriquement conductrice dans les zones prévues à cet effet de la surface. Cela peut être obtenu, par exemple, en mélangeant un film en matière plastique avec des particules électriquement conductrices qui entrent en contact conducteur avec le revêtement chauffant et le court-circuitent localement. Cela peut également être lié à une certaine diminution de la transmission de la lumière qui, il est vrai, teinte plus fortement le vitrage dans cette zone, mais ne la rend pas opaque.

Un effet secondaire de cette mesure est une diminution supplémentaire de la résistance de transition entre la barre conductrice et le revêtement chauffant par un fort agrandissement des surfaces de contact. Une autre conséquence est une réduction de la tension nécessaire pour faire circuler le courant de chauffage sur la surface chauffante.

Il est vrai que cette forme de réalisation est utilisée très préférablement pour les pare-brises pour lesquels une bonne transparence dans la zone centrale du revêtement est importante pour une circulation en toute sécurité, les vitrages chauffants conformes à l'invention peuvent cependant aussi être montées en d'autres endroits dans les véhicules automobiles ainsi que dans d'autres machines et engins mobiles et aussi dans les bâtiments.

Alors qu'avec les cellules solaires traditionnelles équipées d'électrodes en grille ou en peigne la tension est appliquée sur l'épaisseur de la couche absorbante avec l'application conforme à l'invention, une tension est appliquée avec pour objectif de faire circuler un courant dans la surface du revêtement chauffant. Les éléments conducteurs conformes à l'invention ont ainsi pour effet de rapprocher électriquement l'un de l'autre les barres conductrices disposées comme d'habitude au bord du vitrage, mais sans toutefois affecter de manière importante le champ de vision du vitrage.

Utilisée dans les véhicules, la forme de réalisation conforme à l'invention permet notamment l'alimentation directe du chauffage de pare-brise avec la tension continue de 12 à 14 V généralement présente à bord, celle-ci se voyant bien évidemment opposer un revêtement chauffant à la résistance ohmique la plus faible possible. La longueur du conducteur auxiliaire filaire est choisie en fonction de la résistance surfacique réelle du revêtement correspondant ; plus le revêtement lui-même est conducteur, plus les conducteurs auxiliaires peuvent être courts ou étroits.

Cette configuration permet néanmoins de conserver le revêtement de toute la surface du vitrage transparent, à l'exception des fenêtres de communication à prévoir éventuellement, de sorte qu'aucunes mesures de masquage ni d'enlèvement de la couche ne sont nécessaires. Les propriétés positives du revêtement, à savoir notamment la réflexion des infrarouges (isolation thermique) et une coloration homogène sont ainsi conservées sur toute la surface.

Les zones à conductivité accrue du revêtement n'affectent que très faiblement la transparence du vitrage, car même si des éléments conducteurs discrets ou des éléments en grille sont prévus, ceux-ci sont réalisés les plus minces possible et à peine perceptibles visuellement.

Si le matériau conducteur supplémentaire est appliqué par sérigraphie, cette application peut avoir lieu avant ou après le dépôt du système stratifié sur un substrat (vitre en verre ou en matière plastique ou encore film en matière plastique). Cette opération peut avoir lieu en une seule étape avec l'application des barres conductrices proprement dites ou « barres bus ». Dans les deux cas, il se produit avec suffisamment de certitude un contact électrique entre le matériau et la couche conductrice.

Il est en outre possible de court-circuiter avec les fils une fenêtre de communication aménagée dans le revêtement approximativement au bord du vitrage sans avoir à redouter l'apparition de points chauds. Les courants dans les zones à problème connues au niveau des bords latéraux de telles fenêtres de communication sont fortement réduits par les fils.

D'autres particularités et avantages de l'objet de l'invention ressortent du dessin des exemples de réalisation sous la forme de pare-brise pour véhicule et de leur description détaillée ci-après.

Les figures illustrent dans une représentation simplifiée et sans respect de l'échelle :
- Figure 1 une forme de réalisation d'un vitrage transparent muni d'un revêtement chauffant présentant des barres conductrices en forme de bande reliées avec des éléments en grille ou conducteur de type languette qui s'étendent dans la surface du vitrage ;
- Figure 2 : une autre forme dé réalisation dont le revêtement chauffant est divisé en branches de courant au moyen de lignes de séparation et avec lequel les' distributeurs de courant sont réalisés sous la forme de points de contact ;
- Figure : une coupe transversale partielle à travers un vitrage conforme à l'invention le long de la ligne III-III dans la figure 1 ;
- Figure 4 : un détail de la figure 3 avec un point de contact entre un fil et une couche conductrice du système stratifié chauffant ;
- Figure 5 : une variante d'exécution d'un point de contact selon la figure 4 ;
- Figure 6 : une deuxième variante d'exécution d'un point de contact ;
- Figure 7 : une vue grossie d'un point de contact selon les figures 2 et 6.

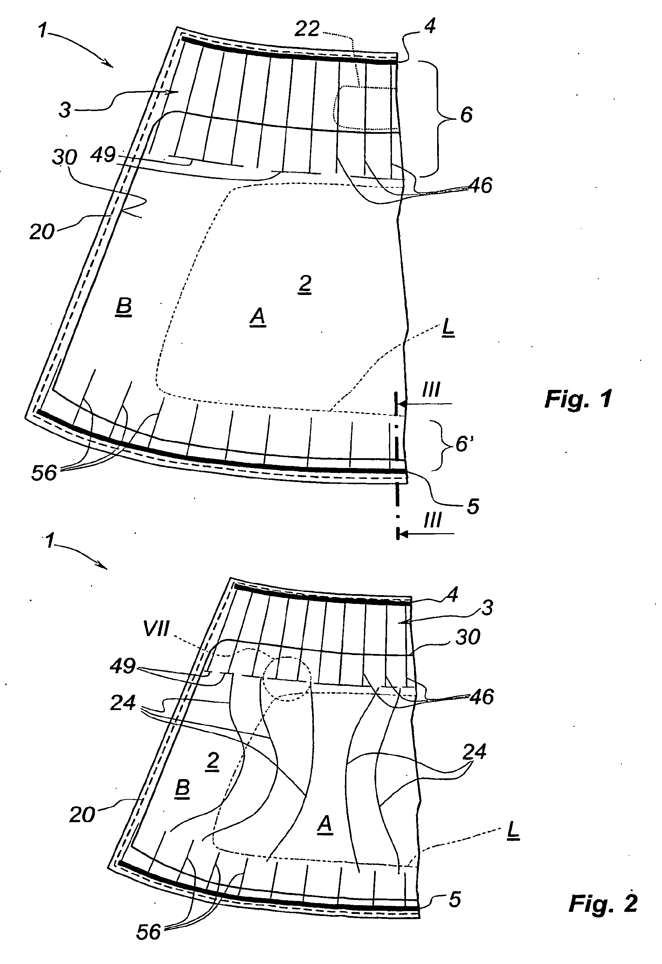

Selon la figure 1, un vitrage 1 composite chauffant ayant un contour essentiellement trapézoïdal (incurvé) incorpore de manière connue un revêtement chauffant 2, résistif et électriquement conducteur, transparent sur toute sa surface. Seule la moitié du vitrage 1 est représentée ici ; son autre moitié est réalisée à l'identique,

Une ligne en tirets désignée par 20 indique que le bord extérieur de la surface du revêtement chauffant continu est de tous les côtés légèrement en retrait vers l'intérieur par rapport au bord extérieur du vitrage 1 composite ou qu'une bande de bordure est détachée du revêtement recouvrant toute la surface. On obtient ainsi d'une part une isolation électrique vers l'extérieur et d'autre part une protection du revêtement contre les dommages liés à la corrosion en provenance de l'extérieur. Le retrait du bord extérieur 20 peut être réalisé en retirant le revêtement le long du bord de la vitrage, en masquant le substrat avant le dépôt du revêtement ou aussi en insérant une ligne de séparation qui traverse le revêtement et qui s'étend le long du bord extérieur du vitrage, laquelle peut être suffisante pour l'isolation et la protection contre la corrosion.

Le système stratifié lui-même est de préférence et d'une manière connue en elle-même un système stratifié supportant de fortes contraintes thermiques comprenant au moins une couche métallique qui supporte sans dommage, c'est-à-dire sans dégradation de ses propriétés optiques, de réflexion de la chaleur et électrique, les températures supérieures à 650 °C nécessaires pour le bombage des vitres en verre. Outre une (ou des) couche(s) métallique(s) (de préférence à base d'argent), le système stratifié comprend encore d'autres couches telles que des couches antireflets diélectriques et éventuellement des couches de blocage ou de protection, également diélectriques.

D'autres systèmes stratifiés électriquement conducteurs supportant des températures plus faibles peuvent cependant être utilisée dans le contexte de la présente invention, notamment aussi des systèmes stratifiés qui sont déposés non pas directement sur une vitre en verre ou en matière plastique rigide, mais sur un film en matière plastique (de préférence un film en PET). Tous ces systèmes stratifiés sont de préférence déposés par pulvérisation cathodique (pulvérisation cathodique par magnétron).

La résistance surfacique des systèmes stratifiés courants de l'art mentionné ici est comprise entre 2, voire 1 et 5 Ω/unité de surface. Les pare-brises de véhicule munis de tels systèmes stratifiés doivent globalement atteindre une transmission de lumière d'au moins 75 %, tout en apportant un fonction de protection contre les rayonnement thermiques solaires, appelée « fonction de contrôle solaire ».

La composition et la fabrication elles-mêmes du système de couche minces stratifié sont toutefois ici d'une importance secondaire, il ne sera donc pas nécessaire de les aborder plus en détails.

Sur le bord du vitrage 1 composite est appliquée une couche colorée opaque 3 en forme de cadre dont le bord intérieur 30 dessine le champ de vision globale du vitrage 1 transparent. Elle peut se trouver dans un plan différent (à l'intérieur ou à l'extérieur du composite) du vitrage composite que le revêtement chauffant 2. Elle sert de couche protectrice contre le rayonnement UV pour un cordon de colle avec lequel le vitrage terminé est collé dans la baie de la carrosserie d'un véhicule. Elle peut en outre réaliser la dissimulation visuelle d'éléments de raccordement pour des fonctions électriques supplémentaires du vitrage 1.

On reconnaît ainsi une première barre conductrice 4 le long du bord supérieur du vitrage 1 composite dans la zone de la surface recouverte par la couche colorée 3 et une deuxième barre conductrice 5 le long du bord inférieur. Les deux barres conductrices 4 et 5 sont reliées électriquement d'une manière connue directement avec le revêtement chauffant 2. Il n'est toutefois pas absolument indispensable dans le cadre de la présente invention d'établir un contact électrique direct entre les barres conductrices et le revêtement chauffant, car les courants de chauffage peuvent également parvenir dans le revêtement chauffant uniquement par une zone semi-résistive (6, 6').

Sous la barre conductrice 4, au centre du vitrage est encore suggérée à moitié une fenêtre de communication 22 qui est elle aussi recouverte par la couche colorée 3 et ainsi dissimulée visuellement.

De nombreux pare-brises de véhicule sont équipés le long de leur bord supérieur d'une bande teintée mais transparente (« filtre en bande ») non représentée ici qui évite notamment l'éblouissement par le rayonnement solaire. Une telle bande peut en outre également contribuer à la dissimulation visuelle de certains composants ou composants fonctionnels du vitrage concerné (par exemple la fenêtre de communication ou ses bords). Une partie de la largeur de la bande peut également remplacer la couche colorée 3 le long du bord supérieur du vitrage ou être prévue en complément de celle-ci.

Le vitrage 1 composite se compose généralement de deux vitres rigides en verre et/ou en matière plastique et d'une couche adhésive qui relie celles-ci par leur surface. Les barres conductrices 4 et 5 sont déposées sur la couche adhésive (par exemple un film adhésif thermoplastique en polyvinylbutyral « PVB », en éthylène-vinyle-acétate « EVA » ou aussi en polyuréthane « PU ») et fixés sur sa surface avant que la couche adhésive soit assemblée et collée avec les vitres rigides.

Les barres conductrices 4 et 5 peuvent être constituées de minces et étroites bandes de film métallique (cuivre, aluminium) qui sont généralement fixées à l'avance sur le film adhésif et sont déposées avec contact électrique sur le système stratifié lors de l'assemblage des couches composites. Mais le contact électrique peut également être garanti par un soudage des barres conductrices 4 et 5. Un bon contact entre les barres conductrices et le système stratifié est obtenu dans un futur processus en autoclave sous l'effet de la chaleur et de la pression.

Comme déjà mentionné, les barres conductrices 4 et 5 peuvent, en alternative ou en complément, être réalisées par impression d'une pâte conductrice qui est cuite lors de la flexion de la vitre en verre. Cette solution est aussi considérablement moins complexe que la dépose de sections de bande métallique. Les barres conductrices imprimées en fabrication industrielle en continu présentent cependant une résistance ohmique supérieure à celles en bandes de film métallique. Par conséquent, la décision d'utiliser des barres conductrices en film métallique ou en sérigraphie ne dépend que du type de vitre individuel et éventuellement de la résistance totale du système de couche chauffant.

En comparaison du revêtement chauffant 2, les barres conductrices présentent toujours des résistances ohmiques négligeables et ne chauffent pas de manière notable pendant le fonctionnement du chauffage.

Il est possible de prévoir d'une manière connue en elle-même dans le vitrage 1 composite deux champs chauffants (ou encore plus) pouvant être alimentés électriquement séparément (avec une séparation verticale, par exemple au centre du vitrage), lesquels doivent naturellement aussi être raccordés par des bornes extérieures séparées à la source de tension correspondante. On peut utiliser dans ce cas un conducteur de masse commun pour les deux champs chauffants, de sorte que seul la barre conductrice 4 ou la barre conductrice 5 soit à diviser en deux sections alors que l'autre est continu. Quatre bornes extérieures sont nécessaires dans la première variante, trois seulement dans la deuxième.

Les bornes extérieures ne seront pas abordées plus en détails ici, car celles-ci ont été décrites de différentes manières dans l'état de la technique.

Le champ de vision dit A du pare-brise est suggéré schématiquement par une ligne en tirets-pointillés L à l'intérieur du champ de vision général dessiné par le bord 30 de la couche colorée 3. La ligne L n'est pas un bord réel ou similaire dans le vitrage ou le système stratifié, mais elle sert uniquement à expliquer visuellement la position approximative du champ de vision A envisagé. Ce dernier est défini dans l'Annexe 18 de l'ECE, R43 au moyen de certains paramètres d'un environnement quelconque d'un véhicule. Tout type de restriction de la visibilité est interdit dans ce champ. Le champ de vision secondaire B, dans lequel de légère restrictions de la visibilité par des éléments intégrés et similaires sont tolérées, s'étend à l'extérieur, autour du champ A.

Un réseau de brins conducteurs 46 en forme de fils s'étend depuis la barre conductrice 4 supérieure dans une bande ou une zone semi-résistive 6 dans le champ de vision général du vitrage 1 composite depuis la zone de bordure recouverte par la couche colorée 3 vers l'intérieur du champ de vision B. Ils se terminent en cul-de-sac ou par une structure conductrice transversale 49 également en forme de fils dans le champ de vision B, plus ou moins loin de la limite extérieure L du champ de vision A. Ils représentent des conducteurs auxiliaires qui sont reliés électriquement avec la barre conductrice 4 et avec le revêtement chauffant 2 et qui sont à faible résistance en comparaison de ce dernier. Une pluralité d'entre eux court-circuite en plus la fenêtre de communication 22, ce qui permet de garantir une alimentation électrique directe même depuis la barre conductrice 4 de la surface du revêtement chauffant 2 qui se trouve de l'autre côté de la fenêtre de communication. Du point de vue visuel, ils sont dissimulés d'un côté par la couche colorée 3. Comme déjà indiqué, une autre dissimulation peut être obtenue par une bande de couleur teintée (filtre en bande) non représentée ici.

Des brins conducteurs 56 en forme de fils s'étendent également dans une bande ou une zone semi-résistive 6' dans le champ de vision B du vitrage 1 composite depuis la barre conductrice inférieure 5.

D'un côté, il n'est pas absolument indispensable de prévoir de tels brins 46, 56 sur les deux barres conductrices 4 et 5. Si des brins 46 et 56 sont prévus des deux côtés, ceux-ci ne s'étendent alors en aucun cas suffisamment loin pour que des fils aux polarités opposées puissent se joindre ou se superposer dans la projection transversale par rapport à leur projection longitudinale globale. La partie centrale du champ de vision et de chauffage (au moins le champ de vision A) reste ainsi transparente et non affectée.

Les zones semi-résistives 6 et/ou 6' forment globalement des zones ayant une conductivité électrique effective nettement accrue par rapport au revêtement chauffant 2. Des branchements en parallèle du revêtement chauffant 2 lui-même et des brins 46 ou 56 sont réalisés dans ces zones. Alors qu'avec les vitres conventionnelles à chauffage par couche de ce type, dans la totalité de l'espace entre les barres conductrices, le courant de chauffage ne doit circuler que sur le revêtement, conformément à la présente invention, cette distance peut être raccourcie de la largeur des zones 6 et/ou 6' à des valeurs entre 50 et 80 % à l'aide des zones 6 et 6' en fonction de l'étendue du champ de vision A, une quantité de courant partielle court-circuitant la distance restante dans les brins et se répartissant de manière adéquate dans le champ de vision A grâce aux structures conductrices transversales 49. Dans le champ de vision principal du vitrage, le courant circule pour l'essentiel perpendiculairement aux barres conductrices 4 et 5 et parallèlement à l'orientation longitudinale des brins 46 / 56.

Mais il subsiste toujours un flux de courant, même réduit sur la surface totale du revêtement chauffant, même dans les zones entre les brins 46 et 56, car les barres conductrices ne peuvent pas être séparées du revêtement chauffant dans les sections entre les éléments en grille. Ce flux de courant ne peut cependant pas entraîner la formation de points chauds au niveau des bords de la fenêtre de communication 22.

Les longueurs et les écarts mutuels des brins 46 et 56, leur nombre ainsi que les dimensions des barres conductrices ne peuvent ici être représentées que schématiquement. Les dimensions relatives sont cependant reconnaissables ; alors que les barres conductrices 4 et 5 proprement dites sont réalisées dans la forme de bande habituelle de plusieurs millimètres de large, les brins 46 et 56, ainsi que les structures conductrices transversales 49 sont les plus minces possible et visuellement discrets, mais toute de même nettement plus longs que les largeurs des barres conductrices. Les fils de ce type sont habituellement fabriqués en tungstène, matériau qui conserve encore une résistance mécanique très élevée même en présence d'épaisseurs de fil extrêmement faibles.

Il est vrai que la configuration individuelle dans un vitrage composite concret peut être définie à l'avance dans de larges limites par des simulations, mais elle reste cependant très dépendante de la taille ou des dimensions du vitrage concret, du type de construction des barres conductrices et des propriétés électriques du revêtement réel.

Il peut aussi être suffisant, par exemple, de ne combiner qu'une seule des barres conductrices avec des brins 46 et des structures conductrices transversales 49. Un faible écart relatif entre les deux barres conductrices 4 et 5 peut même permettre de raccourcir les fils eux-mêmes.

Des écarts mutuels de 25 mm entre les fils individuels a été déterminé utilisable pour un type de vitrage concret. Les puissances de chauffage de surface disponibles pour une résistance donnée des fils peuvent cependant être réglées en fonction du besoin en faisant varier les écarts. De plus, seule une pose rectiligne des fils est représentée ici pour simplification. Cela n'exclut pas de les réaliser en pratique avec des tracés courbes et/ou ondulés ou encore en boucles, lesquels sont si possible moins voyants.

Le présent exposé s'applique dans le même sens également aux options déjà mentionnées précédemment mais non représentées ici de réalisation des zones 6 et/ou 6' sous la forme de zones de la surface du revêtement chauffant 2 ayant une conductivité accrue ou sous la forme d'une zone rendue conductrice de la couche intermédiaire dans un vitrage composite. Du fait de leur répartition régulière sur la surface dans les zones 6 et/ou 6', ces mesures peuvent être légèrement moins perceptibles visuellement que des fils discrets, même si elles s'accompagnent d'une faible teinture du vitrage. Mais cette dernière, combinée avec les fils, peut encore contribuer en plus à la dissimulation visuelle des fils.

Pour les autres objectifs de la présente invention abordés plus haut, les fils 46 ou 56, outre leur bonne conductivité, doivent également posséder un contact galvanique fiable avec la couche conductrice.

La figure 2 représente une variante avec laquelle le champ de vision du revêtement chauffant 2 est divisé par les lignes de séparation 24. Les lignes de séparation 24 peuvent traverser tout la série de couches jusqu'à la surface du substrat ou aussi ne faire saillie que jusqu'à la couche conductrice voisine du substrat. Elles subdivisent le système stratifié en lui-même continu en branches de courant parallèles entre les zones 6 et 6'. Il existe différentes technologiques pour produire de telles lignes de séparation parmi lesquelles la découpe au laser est actuellement la plus pratique, car la plus économique mesurée en résultat. Les lignes de séparation pouvant être réalisées avec elle sont notamment extrêmement étroites et ne sont que difficilement perceptibles à l'oeil nu.

Si l'on s'imagine la vue de la figure 2 du point de vue du conducteur d'un véhicule (dans un véhicule avec le volant à gauche), il doit alors le plus souvent regarder à travers la partie de la surface dans laquelle les lignes de séparation 24 sont les plus proches les unes des autres. Celles-ci poursuivent l'objectif de concentrer le flux de courant à travers le revêtement 2 dans le champ de vision A précisément dans cette zone de vision primaire afin d'y fournir là puissance de chauffe la plus élevée en cas d'obstructions de la visibilité par de la neige, de la glace ou des gouttelettes de condensation et contribuer au plus vite à une visibilité dégagée.

L'implantation des lignes de séparation 24 n'est là aussi représentée que de manière schématique et ne permet de tirer des conclusions sur des configurations réelles que sous certaines conditions. De plus, il n'est pas toujours approprié d'incorporer des lignes de séparation toujours continues, mais il est envisageable de réaliser certaines ou la totalité des lignes de séparation segmentées, pour ainsi dire en pointillés ou, à la place de lignes de séparation plus longues, de prévoir de courtes sections individuelles pour dévier le courant dans des branches prédéfinies. Mais cette solution est également connue en elle-même du document DE 36 44 297 A1 mentionné ici.

De courts traits transversaux matérialisant des structures conductrices transversales 49 sont reconnaissables dans la figure 2, comme en figure 1, au niveau des extrémités libres des brins 46.

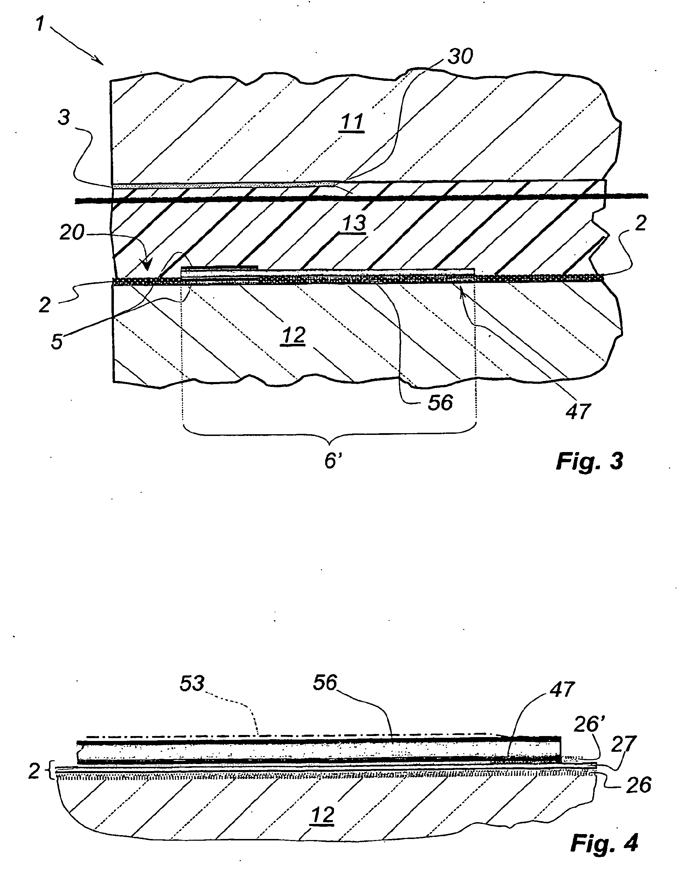

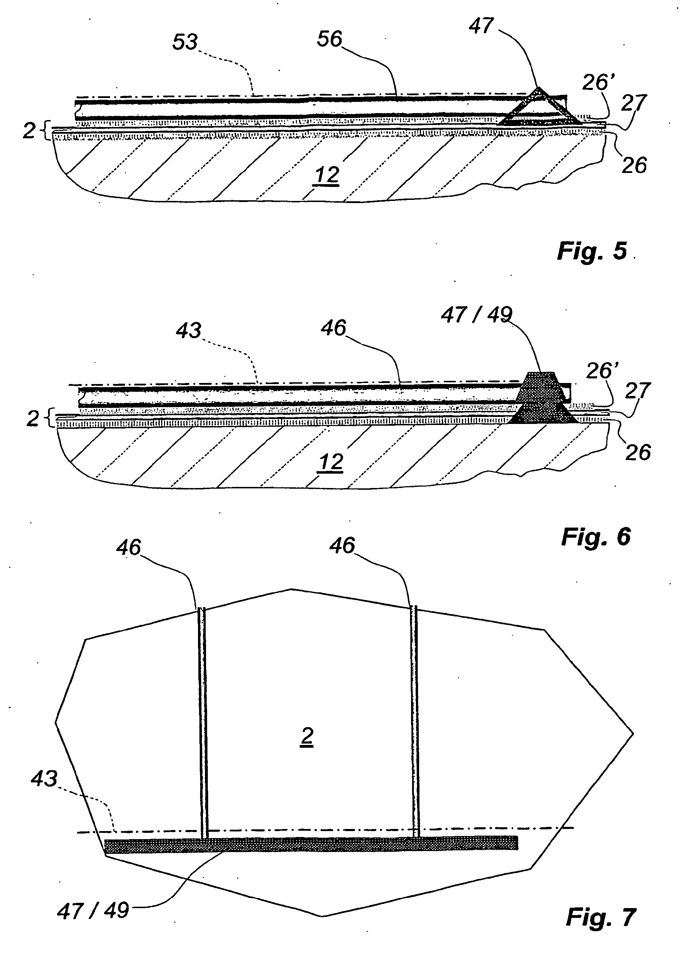

Il peut en outre y avoir des points de contact conformes à la présente invention au niveau desquels les brins 46 sont reliés avec la couche conductrice qui se trouve au-dessous par le biais d'un matériau conducteur supplémentaire. Au-delà de la pure fonction d'établissement du contact, ces points de contact sont ici en plus réalisés sous la forme de distributeurs de courant. Cet aspect sera encore abordé plus en détails au moyen des figures 4 à 7. Un cercle en tirets-pointillés et identifié par VII dessine un détail reconnaissable plus en détails dans la figure 7.

Il convient de signaler expressément qu'il n'existe aucune combinaison obligatoire entre un système stratifié muni de lignes de séparation 24 et les points de contact représentés, mais que ces derniers peuvent bien évidemment aussi être prévus dans une configuration selon la figure 1 sans lignes de séparation.

La figure 3 représente une vue en coupe à travers le bord du vitrage 1 le long de la ligne III-III dans la figure 1. On peut reconnaître deux vitres individuelles rigides 11, 12 (en verre ou en matière plastique) ainsi qu'une couche ou feuille adhésive 13 visuellement transparente claire et électriquement isolante qui relie celles-ci entre elles par adhésion de la manière habituelle. Cette dernière est divisée par des pointillés dans le sens horizontal pour indiquer quelle est en réalité nettement plus épaisse que le système stratifié réalisant le revêtement chauffant 2 transparent déposé sur la vitre inférieure 12. Celui-ci est représenté ici hachuré en gris pour des raisons de visibilité. La feuille adhésive peut être formée de la manière habituelle par un film en PVB d'environ 0,76 mm d'épaisseur.

Les caractères de référence des figures 1 et 2 ont été conservés. Il est reconnaissable que le revêtement chauffant 2, dont la zone de bordure extérieure est divisée par la ligne de séparation 20, se trouve sur la vitre 12 au-dessous de la barre conductrice 5 et de l'élément de grille formé par le brin 56 rattaché à celui-ci qui a été ici appliqué sous la forme de structures sérigraphiées après avoir déposé le revêtement 2. La couche colorée opaque 3 est ici imprimée sur la surface de la vitre 11 qui se trouve à l'intérieur du composite et recouvre dans la projection verticale (sens de la transparence) la ligne de séparation 20, la barre conductrice 5 et la section du brin 56 qui est raccordée directement à celle-ci. Ce brin se poursuit cependant hors du champ de vision général du vitrage 1 matérialisé par le bord 30 de la couche colorée opaque 3.

La barre conductrice 5 est ici représentée sous la forme de deux minces bandes métalliques superposées qui incluent entre elles l'une des extrémités du brin 56. Cela permet de garantir un bon contact électrique entre le fil (en tungstène) et les bandes métalliques généralement étamées. De plus, il est suggéré schématiquement que la bande métallique qui fait face au revêtement chauffant 2 est noyée dans la couche de protection de ce dernier ; des mesures appropriées seront prises conformément à l'état de la technique pour établir avec certitude des liaisons électriques ente les barres conductrices et la couche conductrice.

La zone 6' de la figure 1 est de nouveau suggérée ici ; il est plus facile de constater ici que sa largeur se compose de la largeur de la barre conductrice 5 et de la longueur des brins 56.

Il est facile de reconnaître que le brin 56 repose pour l'essentiel sur la couche protectrice (diélectrique) du système stratifié. Un point de contact 47 est par conséquent suggéré au niveau de son extrémité libre qui se trouve dans le champ de vision B du vitrage, au niveau duquel le brin 56 est relié avec la couche conductrice.

La figure 4 représente une vue grossie d'une première forme de réalisation du point de contact 47 selon la figure 3. La structure interne du système stratifié, comprend une couche protectrice 26' en haut et une couche protectrice 26 en bas encadrant une couche conductrice 27 incluse entre celles-ci. L'extrémité libre du brin 56 a été enfoncé suffisamment loin à travers la couche protectrice supérieure 26' dans le système stratifié au niveau du point de contact 47 pour obtenir un contact électrique sécurisé avec la couche conductrice 27.

Bien évidemment, le brin 56 doit être fixé de manière appropriée à la couche protectrice supérieure dans ce stade de la fabrication. Cela peut être réalisé à l'aide d'un film de transfert 53, par exemple, qui apparaît ici sous la forme d'une ligne en tirets-pointillés au-dessus du brin 56. Après avoir réalisé le point de contact, le film de transfert est soit retiré et remplacé par la feuille adhésive 13, soit il reste en place, s'il se compose du même matériau thermoplastique (PVB) que la feuille adhésive 13 ou d'un matériau compatible avec celle-ci, dans le composite définitif et fusionne avec la feuille adhésive 13 lors du processus d'assemblage thermique. À la différence de la représentation, il peut être prévu que l'extrémité libre du brin fasse légèrement saillie au-dessus du film de transfert afin que celui-ci ne gêne pas l'effet mécanique.

La figure 5 représente une autre forme de réalisation du point de contact 47 qui est réalisée ici en ajoutant un matériau conducteur. Ce matériau peut être ajouté par sérigraphie, par exemple, au moyen d'un gabarit de sérigraphie qui est posé sur les fils des brins 56 fixés. On peut supposer que le matériau relativement granuleux (une fritte de verre à forte proportion d'argent), sous la pression de la raclette, transperce également la couche protectrice supérieur 26' et une partie de la couche conductrice 27 (ou plus tard par diffusion lors de la cuisson) de sorte qu'il établisse dans tous les cas un pont électrique ou un point de contact entre le fil du brin 56 et la couche conductrice 27. Là aussi, les fils à recouvrir peuvent être maintenus en place à l'aide d'un film de transfert, les extrémités des fils devant là aussi faire saillie au-dessus du film.

Si, contrairement à la représentation de la figure 3, on utilise des barres conductrices 4 et 5 imprimées, ces dernières peuvent alors être fabriquées conjointement avec le matériau conducteur supplémentaire au cours d'une même opération et à partir de la même pâte de sérigraphie. Aucune autre opération particulière n'est plus nécessaire ensuite pour établir le contact électrique entre les fils et les barres conductrices.

La figure 6 représente encore une autre variante dans laquelle un matériau de contact supplémentaire a déjà été appliqué (par exemple imprimé) sur la vitre 12 avant la dépose du système stratifié (de préférence au cours d'une seule opération avec la barre conductrice associée). Les fils des brins 56 sont ensuite déposés et, au besoin, encore une fois recouverts d'un petit point ou d'une bande de matériau supplémentaire de manière analogue à la figure 5.

Il est judicieux dans cette forme de réalisation d'appliquer le matériau supplémentaire non pas ponctuellement sur la vitre 12, mais sous la forme d'une ligne afin qu'il n'existe pas de contraintes excessives en matière de précision de positionnement des fils. Cela donne lieu à des configurations telles qu'elles ont déjà été suggérées dans la figure 2 et qui sont à présent représentées encore plus en détails au moyen de la figure 7.

La figure 7 représente en tant que détail de la figure 2 (cercle VII) une vue de dessus sur les extrémités libres de deux brins 46 en combinaison avec une structure conductrice transversale 49 sous forme de fil et formant un point de contact 47 filaire qui a été réalisé par l'application rectiligne d'un matériau conducteur supplémentaire selon la figure 5 ou 6. Le bord d'un film de transfert 43 est ici suggéré par des pointillés et il est là aussi légèrement en retrait par rapport aux extrémités libres des brins 46. Les rapports d'épaisseur n'ont pas pu être reproduit à l'échelle ici, les fils des brins 46 sont généralement plus minces que les lignes aussi fines soient-elles d'un matériau conducteur supplémentaire appliqué. On reconnaît que la ligne de la structure conductrice transversale 49, outre sa fonction de pont vers la couche conductrice, s'étend également de telle sorte qu'elle relie électriquement les deux brins 46 et sert en même temps encore à élargir la ligne d'entrée ou de sortie du courant entre les fils et la couche conductrice. Il est évident qu'une telle mesure qui est toujours très discrète visuellement permet d'éviter encore mieux la formation de points chauds au niveau des points de contact.

## Revendications

1. Vitrage (1) transparent muni d'un revêtement chauffant (2), résistif, qui s'étend sur une partie importante d'une surface du vitrage, notamment sur un champ de vision principal (A), et qui est relié électriquement au moins indirectement avec au mois deux barres conductrices (4, 5) de telle sorte que lors de l'application d'une tension d'alimentation électrique entre les deux barres conductrices, un courant circule entre les barres conductrices en chauffant un champ de chauffage dans ledit revêtement chauffant(2), ledit champ de chauffage comportant au moins une zone semi-résistive (6, 6') formant globalement une zone ayant une conductivité électrique effective nettement accrue par rapport au revêtement chauffant 2, ladite zone semi-résistive (6, 6') étant en contact direct avec au moins une barre conductrice (4) et comportant des brins conducteurs (46) réalisés sous la forme de minces fils longitudinaux dont la résistance ohmique est inférieure à celle du revêtement chauffant(2), **caractérisé en ce que** au moins un brin conducteur (46) comporte une structure conductrice transversale (49) en contact électrique avec ladite zone semi-résistive (6).

2. Vitrage (1) selon la revendication 1, **caractérisé en ce que** ladite structure conductrice transversale (49) est positionnée à l'extrémité du brin conducteur (46) la plus éloignée de ladite barre conductrice (4).

3. Vitrage (1) selon la revendication 1 ou 2, **caractérisé en ce que** ladite structure conductrice transversale (49) est en contact électrique avec plusieurs brins conducteur (46).

4. Vitrage (1) selon la revendication 1, 2 ou 3, **caractérisé en ce que** ladite zone semi-résistive (6) comporte plusieurs structures conductrices transversales (49).

5. Vitrage (1) selon l'une des revendications précédentes, **caractérisé en ce qu'**une (ou plusieurs) structure (s) conductrice (s) transversale (s) (49) est (ou sont) disposée(s) sur un substrat porteur du revêtement chauffant (2), sous ce revêtement chauffant.

6. Vitrage (1) selon l'une des revendications précédentes, **caractérisé en ce qu'**une (ou plusieurs) structure(s) conductrice(s) transversale(s) (49) est (ou sont) disposée(s) sur un substrat porteur du revêtement chauffant (2), sur ce revêtement chauffant.

7. Vitrage (1) selon l'une des revendications précédentes, **caractérisé en ce qu'**une (ou plusieurs) structure(s) conductrice(s) transversale(s) (49) est (ou sont) disposée(s) sur une feuille adhésive (13) dudit vitrage.

8. Vitrage (1) selon l'une des revendications précédentes, **caractérisé en ce qu'**une (ou plusieurs) structure(s) conductrice(s) transversale(s) (49) est (ou sont) en forme de ligne(s) et/ou de bande(s).

9. Vitrage (1) selon la revendication précédente, **caractérisé en ce qu'**une (ou des) ligne(s) et/ou bande(s) est (ou sont) droite(s), vu par projection sur une surface du vitrage.

10. Vitrage (1) selon la revendication 8, **caractérisé en ce qu'**une (ou des) ligne(s) et/ou bande(s) est (ou sont) courbe(s), vu par projection sur une surface du vitrage.

11. Vitrage (1) selon l'une des revendications précédentes, **caractérisé en ce qu'**une (ou des) structure(s) conductrice(s) transversale(s) (49) est (ou sont) orientée(s) pour l'essentiel perpendiculairement à la projection longitudinale globale du (ou des) brin(s) conducteur(s) (46).

12. Vitrage (1) selon l'une des revendications précédentes, **caractérisé en ce que** la (ou les) structure (s) conductrice(s) transversale(s) (49) s'étend(ent) dans le champ de chauffage seulement en-dehors d'un champ de vision principal (A) du vitrage (1).

13. Vitrage (1) selon l'une des revendications précédentes, **caractérisé en ce que** le (ou les) brin(s) conducteur(s) (46) et la (ou les) structure(s) conductrice(s) transversale(s) (49) n'ont pas une épaisseur ou une largeur supérieure à 0,5 mm, de préférence pas supérieure à 0,3 mm, mesurée par projection sur une surface du vitrage.

14. Vitrage (1) selon l'une des revendications précédentes, **caractérisé en ce que** les structures conductrices transversales (49) sont disposées avec des écarts réguliers entre elles.

15. Vitrage (1) selon l'une des revendications précédentes, **caractérisé en ce que** les structures conductrices transversales (49) sont toutes réalisées de la même longueur.

16. Vitrage selon l'une des revendications précédentes, **caractérisé en ce que** la (ou les) structure(s) conductrice(s) transversale(s) est (ou sont) seulement disposée(s) sur une partie de la projection longitudinale d'une, de plusieurs ou de toutes les barres conductrices (4, 5).

17. Vitrage (1) selon l'une des revendications précédentes sous la forme d'un pare-brise de véhicule, **caractérisé en ce que** la ou les zones (6, 6') comportant la (ou les) structure(s) conductrice(s) transversale(s) (49) s'étendent au maximum jusqu'à la limite du champ de vision A normalisé de ce pare-brise.

18. Vitrage (1) selon l'une des revendications précédentes, **caractérisé en ce que** le revêtement chauffant (2) est divisé par des lignes de séparation (24) dans le champ de vision général, ces lignes de séparation partageant le revêtement chauffant en chemins de courant.

19. Vitrage (1) selon l'une des revendications précédentes, **caractérisé en ce que** le revêtement chauffant (2) présente une conductivité accrue, au moins dans une partie de la (ou des) zone(s) semi-résistive(s) (6), cette partie correspondant sensiblement à la partie comportant le (ou les) brin(s) conducteur(s) (46) comportant une structure conductrice transversale (49).

20. Vitrage (1) selon l'une des revendications précédentes, ledit vitrage étant un vitrage composite et comprenant deux vitres rigides (11, 12) en verre et/ou en matière plastique et une feuille adhésive (13) qui relie celles-ci par leurs faces principales, le revêtement chauffant (2), les barres conductrices (4, 5), les brins conducteurs (46) et comportant la (ou les) structure(s) conductrice(s) transversale(s) (49) étant disposés sur une ou des surfaces qui sont à l'intérieur du vitrage composite.

21. Vitrage (1) composite selon la revendication précédente, **caractérisé en ce que** la feuille adhésive (13) est électriquement conductrice dans une partie de la (ou des) zone(s) semi-résistive(s) (6), cette partie correspondant sensiblement à la partie comportant le (ou les) brin(s) conducteur(s) (46) comportant une structure conductrice transversale (49).

22. Procédé de chauffage d'un vitrage (1) selon l'une des revendications précédentes, **caractérisé en ce que** ledit vitrage étant alimenté en courant électrique par l'intermédiaire des deux barres conductrices (4, 5) au moins, le courant dans la partie du champ chauffant qui n'est pas en contact avec le (ou les) brin(s) conducteur(s) (46), et notamment dans un champ de vision principal (A) du vitrage (1), circule pour l'essentiel parallèlement à la projection longitudinale globale du (ou des) brin(s) conducteur(s) (46) malgré la présence de la (ou des) structure(s) conductrice(s) transversale (s) (49).

23. Procédé selon la revendication précédente, **caractérisé en ce que** le revêtement chauffant (2) étant divisé par des lignes de séparation (24) dans le champ de vision général, qui partagent le revêtement chauffant (2) en chemins de courant, lesdites lignes de séparation (24) rassemblent le courant dans le champ de vision principal A.

24. Procédé de fabrication d'un vitrage (1) selon l'une des revendications 1 à 21, **caractérisé en ce qu'**une (ou des) structure(s) conductrice(s) transversale(s) (49) et éventuellement une partie au moins des brins conducteur (46) est (ou sont) imprimê(s) sur un substrat après avoir déposé le revêtement chauffant (2).

25. Procédé de fabrication d'un vitrage (1) selon l'une des revendications 1 à 21 et notamment procédé de fabrication selon la revendication précédente, **caractérisé en ce qu'**une (ou des) structure(s) conductrice(s) transversale(s) (49) et éventuellement une partie au moins des brins conducteur (46) est (ou sont) imprimé(s) sur un substrat avant d'avoir déposé le revêtement chauffant (2).

26. Procédé de fabrication d'un vitrage (1) selon l'une des revendications 24 ou 25, **caractérisé en ce que** la (ou les) structure (s) conductrice (s) transversale (s) (49) est (ou sont) fabriquée(s) par sérigraphie ou par impression par jets d'encre.

27. Procédé de fabrication d'un vitrage (1) selon l'une quelconque des revendications 24 à 26 **caractérisé en ce qu'**une (ou des) structure(s) conductrice(s) transversale(s) (49) et éventuellement une partie au moins des brins conducteur (46), est (ou sont) raccordés électriquement à ladite zone semi-résistive (6), et éventuellement directement au revêtement chauffant (2), par brasage au moins en des points de contact discrets.

28. Procédé de fabrication d'un vitrage (1) selon l'une des revendications 1 à 21 et notamment procédé de fabrication selon l'une des revendications 24 à 27, **caractérisé en ce que** des points de contact (47) sont réalisés par une action mécanique, notamment des oscillations destinées à transpercer au moins une couche protectrice diélectrique (26'), sur une (ou des) structure(s) conductrice(s) transversale(s) (49) et/ou une partie au moins des brins conducteur (46).

## Patentansprüche

1. Transparente Verglasung (1), die mit einer resistiven Heizbeschichtung (2) versehen ist, welche sich über einen großen Teil einer Fläche der Verglasung, insbesondere über ein Hauptsichtfeld (A) erstreckt und die wenigstens indirekt mit wenigstens zwei Stromschienen (4, 5) derart elektrisch verbunden ist, dass beim Anlegen einer elektrischen Speisespannung zwischen den beiden Stromschienen ein Strom zwischen den Stromschienen unter Erwärmen eines Heizfeldes in der Heizbeschichtung (2) fließt, wobei das Heizfeld wenigstens einen semi-resistiven Bereich (6, 6') umfasst, der im Allgemeinen einen Bereich bildet, dessen effektive elektrische Leitfähigkeit im Vergleich zu der Heizbeschichtung (2) deutlich höher ist, wobei der semi-resistive Bereich (6, 6') mit wenigstens einer Stromschiene (4) in direktem Kontakt ist und elektrisch leitende Adern (46) umfasst, die in Form von feinen Längsdrähten ausgebildet sind, deren ohmscher Widerstand geringer als derjenige der Heizbeschichtung (2) ist, **dadurch gekennzeichnet, dass** wenigstens eine elektrisch leitende Ader (46) eine mit dem semi-resistiven Bereich (6) in elektrischem Kontakt befindliche leitende Querstruktur (49) umfasst.

2. Verglasung (1) nach Anspruch 1, **dadurch gekennzeichnet, dass** die leitende Querstruktur (49) an dem von der Stromschiene (4) am weitesten entfernt liegenden Ende der elektrisch leitenden Ader (46) angeordnet ist.

3. Verglasung (1) nach Anspruch 1 oder 2, **dadurch gekennzeichnet, dass** die leitende Querstruktur (49) mit mehreren elektrisch leitenden Adern (46) in elektrischem Kontakt ist.

4. Verglasung (1) nach Anspruch 1, 2 oder 3, **dadurch gekennzeichnet, dass** der semi-resistive Bereich (6) mehrere leitende Querstrukturen (49) umfasst.

5. Verglasung (1) nach einem der vorstehenden Ansprüche, **dadurch gekennzeichnet, dass** eine (oder mehrere) leitende Querstruktur(en) (49) auf einem Trägersubstrat der Heizbeschichtung (2), unter dieser Heizbeschichtung angeordnet ist (oder sind).

6. Verglasung (1) nach einem der vorstehenden Ansprüche, **dadurch gekennzeichnet, dass** eine (oder mehrere) leitende Querstruktur(en) (49) auf einem Trägersubstrat der Heizbeschichtung (2), auf dieser Heizbeschichtung angeordnet ist (oder sind).

7. Verglasung (1) nach einem der vorstehenden Ansprüche, **dadurch gekennzeichnet, dass** eine (oder mehrere) leitende Querstruktur(en) (49) auf einer Haftfolie (13) der Verglasung angeordnet ist (oder sind).

8. Verglasung (1) nach einem der vorstehenden Ansprüche, **dadurch gekennzeichnet, dass** eine (oder mehrere) leitende Querstruktur(en) (49) in Form einer (von) Linie(n) und/oder eines (von) Streifen(s) vorliegt (oder vorliegen).

9. Verglasung (1) nach dem vorstehenden Anspruch, **dadurch gekennzeichnet, dass**, in Projektion auf eine Fläche der Verglasung betrachtet, eine Linie (oder Linien) und/oder ein Streifen (oder Streifen) gerade ist (oder sind).

10. Verglasung (1) nach Anspruch 8, **dadurch gekennzeichnet, dass**, in Projektion auf eine Fläche der Verglasung betrachtet, eine Linie (oder Linien) und/oder ein Streifen (oder Streifen) gekrümmt ist (oder sind).

11. Verglasung (1) nach einem der vorstehenden Ansprüche, **dadurch gekennzeichnet, dass** eine leitende Querstruktur (oder leitende Querstrukturen) (49) im Wesentlichen senkrecht zur Gesamtlängsprojektion der elektrisch leitenden Ader (oder Adern) (46) ausgerichtet ist (oder sind).

12. Verglasung (1) nach einem der vorstehenden Ansprüche, **dadurch gekennzeichnet, dass** die leitende(n) Querstruktur (oder Querstrukturen) (49) sich in dem Heizfeld lediglich außerhalb eines Hauptsichtfeldes (A) der Verglasung (1) erstreckt (erstrecken).

13. Verglasung (1) nach einem der vorstehenden Ansprüche, **dadurch gekennzeichnet, dass** die elektrisch leitende(n) Ader (oder Adern) (46) und die leitende(n) Querstruktur (oder Querstrukturen) (49) keine Dicke oder Breite, in Projektion auf eine Fläche der Verglasung gemessen, aufweisen, die mehr als 0,5 mm, vorzugsweise mehr als 0,3 mm beträgt.

14. Verglasung (1) nach einem der vorstehenden Ansprüche, **dadurch gekennzeichnet, dass** die leitenden Querstrukturen (49) mit gleichmäßigen Abständen zueinander angeordnet sind.

15. Verglasung (1) nach einem der vorstehenden Ansprüche, **dadurch gekennzeichnet, dass** die leitenden Querstrukturen (49) alle mit der gleichen Länge ausgebildet sind.

16. Verglasung nach einem der vorstehenden Ansprüche, **dadurch gekennzeichnet, dass** die leitende(n) Querstruktur (oder Querstrukturen) lediglich über einen Teil der Längsprojektion einer, mehrerer oder aller Stromschienen (4, 5) angeordnet ist (oder sind).

17. Verglasung (1) nach einem der vorstehenden Ansprüche, in Form einer Windschutzscheibe eines Fahrzeugs, **dadurch gekennzeichnet, dass** der oder die Bereiche (6, 6'), welche die leitende(n) Querstruktur (oder Querstrukturen) (49) umfassen, sich höchstens bis zur Grenze des genormten Sichtfeldes A dieser Windschutzscheibe erstrecken.

18. Verglasung (1) nach einem der vorstehenden Ansprüche, **dadurch gekennzeichnet, dass** die Heizbeschichtung (2) in dem Gesamtsichtfeld durch Trennlinien (24) unterteilt ist, wobei diese Trennlinien die Heizbeschichtung in Strompfade aufteilen.

19. Verglasung (1) nach einem der vorstehenden Ansprüche, **dadurch gekennzeichnet, dass** die Heizbeschichtung (2), wenigstens in einem Teil des (oder der) semi-resistiven Bereichs (Bereiche) (6), eine höhere Leifähigkeit aufweist, wobei dieser Teil im Wesentlichen dem Teil entspricht, der die eine leitende Querstruktur (49) umfassende(n) elektrisch leitende(n) Ader (oder Adern) (46) umfasst.

20. Verglasung (1) nach einem der vorstehenden Ansprüche, wobei die Verglasung eine Verbundverglasung ist und zwei starre Scheiben (11, 12) aus Glas und/oder aus Kunststoff sowie eine Haftfolie (13), die diese über ihre Hauptseiten verbindet, umfasst, wobei die Heizbeschichtung (2), die Stromschienen (4, 5), die elektrisch leitenden Adern (46) und die leitende(n) Querstruktur (oder Querstrukturen) (49) auf einer Fläche oder Flächen angeordnet sind, die sich innerhalb der Verbundverglasung befinden.

21. Verbundverglasung (1) nach dem vorstehenden Anspruch, **dadurch gekennzeichnet, dass** die Haftfolie (13) in einem Teil des (oder der) semi-resistiven Bereichs (Bereiche) (6) elektrisch leitend ist, wobei dieser Teil im Wesentlichen dem Teil entspricht, der die eine leitende Querstruktur (49) umfassende(n) elektrisch leitende(n) Ader (oder Adern) (46) umfasst.

22. Verfahren zum Beheizen einer Verglasung (1) nach einem der vorstehenden Ansprüche, **dadurch gekennzeichnet, dass**, da die Verglasung mittels wenigstens der beiden Stromschienen (4, 5) mit Strom gespeist wird, der Strom in dem Teil des Heizfeldes, der nicht mit der (oder den) elektrisch leitenden Ader(n) (46) in Kontakt ist, und insbesondere in einem Hauptsichtfeld (A) der Verglasung (1), trotz des Vorliegens der leitenden Querstruktur (oder Querstrukturen) (49) im Wesentlichen parallel zur Gesamtlängsprojektion der elektrisch leitenden Ader (oder Adern) (46) fließt.

23. Verfahren nach dem vorstehenden Anspruch, **dadurch gekennzeichnet, dass**, da die Heizbeschichtung (2) in dem Gesamtsichtfeld durch Trennlinien (24) unterteilt ist, welche die Heizbeschichtung (2) in Strompfade aufteilen, die Trennlinien (24) den Strom in dem Hauptsichtfeld A sammeln.

24. Verfahren zur Herstellung einer Verglasung (1) nach einem der Ansprüche 1 bis 21, **dadurch gekennzeichnet, dass** eine leitende Querstruktur (oder Querstrukturen) (49) und eventuell wenigstens ein Teil der elektrisch leitenden Adern (46) auf ein Substrat gedruckt wird (oder werden), nachdem die Heizbeschichtung (2) aufgebracht wurde.

25. Verfahren zur Herstellung einer Verglasung (1) nach einem der Ansprüche 1 bis 21 und insbesondere Herstellungsverfahren nach dem vorstehenden Anspruch, **dadurch gekennzeichnet, dass** eine leitende Querstruktur (oder Querstrukturen) (49) und eventuell wenigstens ein Teil der elektrisch leitenden Adern (46) auf ein Substrat gedruckt wird (oder werden), bevor die Heizbeschichtung (2) aufgebracht wurde.

26. Verfahren zur Herstellung einer Verglasung (1) nach einem der Ansprüche 24 oder 25, **dadurch gekennzeichnet, dass** die leitende(n) Querstruktur (oder Querstrukturen) (49) mittels Siebdruck oder Tintenstrahldruck hergestellt wird (oder werden).

27. Verfahren zur Herstellung einer Verglasung (1) nach einem der Ansprüche 24 bis 26, **dadurch gekennzeichnet, dass** eine leitende Querstruktur (oder Querstrukturen) (49) und eventuell wenigstens ein Teil der elektrisch leitenden Adern (46) mit dem semi-resistiven Bereich (6), und eventuell direkt mit der Heizbeschichtung (2), durch Löten wenigstens an diskreten Kontaktstellen elektrisch verbunden sind.

28. Verfahren zur Herstellung einer Verglasung (1) nach einem der Ansprüche 1 bis 21 und insbesondere Herstellungsverfahren nach einem der Ansprüche 24 bis 27, **dadurch gekennzeichnet, dass** Kontaktstellen (47) durch eine mechanische Wirkung ausgebildet werden, insbesondere Schwingungen, die dazu bestimmt sind, wenigstens eine dielektrische Schutzschicht (26') auf einer leitenden Querstruktur (oder Querstrukturen) (49) und/oder wenigstens einem Teil der elektrisch leitenden Adern (46) zu durchdringen.

## Claims

1. A transparent windowpane (1) provided with a resistive heating coating (2) that extends over a substantial part of a surface of the windowpane, especially over a main field of view (A), and which is electrically connected, at least indirectly, with at least two busbars (4, 5) in such a way that, when a power supply voltage is applied between the two busbars, a current flows between the busbars, heating a heating field in said heating coating (2), said heating field including at least one semiresistive region (6, 6') forming overall region having an effective electrical conductivity appreciably greater than the heating coating 2, said semiresistive region (6, 6') being in direct contact with at least one busbar (4) and including conducting strands (46) produced in the form of thin longitudinal wires, the ohmic resistance of which is less than that of the heating coating (2), **characterized in that** at least one conducting strand (46) has a transverse conducting structure (49) in electrical contact with said semiresistive region (6).

2. The windowpane (1) as claimed in claim 1, **characterized in that** said transverse conducting structure (49) is positioned at that end of the conducting strand (46) which is furthest away from said busbar (4).

3. The windowpane (1) as claimed in claim 1 or 2, **characterized in that** said transverse conducting structure (49) is in electrical contact with several conducting strands (46).

4. The windowpane (1) as claimed in claim 1, 2 or 3, **characterized in that** said semiresistive region (6) includes several transverse conducting structures (49).

5. The windowpane (1) as claimed in one of the preceding claims, **characterized in that** one or more transverse conducting structures (49) are placed on a substrate carrying the heating coating (2), beneath this heating coating.

6. The windowpane (1) as claimed in one of the preceding claims, **characterized in that** one or more transverse conducting structures (49) are placed on a substrate carrying the heating coating (2), on this heating coating.

7. The windowpane (1) as claimed in one of the preceding claims, **characterized in that** one or more transverse conducting structures (49) are placed on an adhesive sheet (13) of said windowpane.

8. The windowpane (1) as claimed in one of the preceding claims, **characterized in that** one or more transverse conducting structures (49) are in the form of one or more lines and/or one or more bands.

9. The windowpane (1) as claimed in the preceding claim, **characterized in that** one or more lines and/or one or more bands are straight, seen by projection on a surface of the windowpane.

10. The windowpane (1) as claimed in claim 8, **characterized in that** one or more lines and/or one or more bands are curved, seen by projection on a surface of the windowpane.

11. The windowpane (1) as claimed in one of the preceding claims, **characterized in that** one or more transverse conducting structures (49) are essentially oriented perpendicular to the overall longitudinal projection of the one or more conducting strands (46).

12. The windowpane (1) as claimed in one of the preceding claims, **characterized in that** the one or more transverse conducting structures (49) extend within the heating field only outside of a main field of view (A) of the windowpane (1).

13. The windowpane (1) as claimed in one of the preceding claims, **characterized in that** the one or more conducting strands (46) and the one or more transverse conducting structures (49) do not have a thickness or a width greater than 0.5 mm, preferably not greater than 0.3 mm, measured by projection on a surface of the windowpane.

14. The windowpane (1) as claimed in one of the preceding claims, **characterized in that** the transverse conducting structures (49) are placed with uniform gaps between them.

15. The windowpane (1) as claimed in one of the preceding claims, **characterized in that** the transverse conducting structures (49) are all produced with the same length.

16. The windowpane as claimed in one of the preceding claims, **characterized in that** the one or more transverse conducting structures are only placed on part of the longitudinal projection of one or more or all of the busbars (4, 5).

17. The windowpane (1) as claimed in one of the preceding claims in the form of a vehicle windshield, **characterized in that** the one or more regions (6, 6') that include the one or more transverse conducting structures (49) extend at most up to the boundary of the standardized field of view A of this windshield.

18. The windowpane (1) as claimed in one of the preceding claims, **characterized in that** the heating coating (2) is divided by separating lines (24) in the general field of view, these separating lines dividing the heating coating into current paths.

19. The windowpane (1) as claimed in one of the preceding claims, **characterized in that** the heating coating (2) has greater conductivity, at least in part of the one or more semiresistive regions (6), this part corresponding substantially to the part that includes the one or more conducting strands (46) having a transverse conducting structure (49).

20. The windowpane (1) as claimed in one of the preceding claims, said windowpane being a composite windowpane and comprising two rigid panes (11, 12), made of glass and/or plastic, and an adhesive sheet (13) that connects said panes via their principal faces, the heating coating (2), the busbars (4, 5), the conducting strands (46) including and the one or more transverse conducting structures (49) being placed on one or more surfaces that are within the composite windowpane.

21. The composite windowpane (1) as claimed in the preceding claim, **characterized in that** the adhesive sheet (13) is electrically conducting in part of the one or more semiresistive regions (6), this part corresponding substantially to the part that includes the one or more conducting strands (46) having a transverse conducting structure (49).

22. A method of heating a windowpane (1) as claimed in one of the preceding claims, **characterized in that**, when said windowpane is supplied with electric current via at least the two busbars (4, 5), the current **in that** part of the heating field which is not in contact with the one or more conducting strands (46), and especially in a main field of view (A) of the windowpane (1), flows essentially parallel to the overall longitudinal projection of the one or more conducting strands (46) despite the presence of the one or more transverse conducting structures (49).

23. The method as claimed in the preceding claim, **characterized in that**, when the heating coating (2) is divided by separating lines (24) in the general field of view, which divide the heating coating (2) into current paths, said separating lines (24) collect the current in the main field of view A.

24. A process for manufacturing a windowpane (1) as claimed in one of claims 1 to 21, **characterized in that** one or more transverse conducting structures (49) and optionally at least some of the conducting strands (46) are printed on a substrate after the heating coating (2) has been deposited.

25. A process for manufacturing a windowpane (1) as claimed in one of claims 1 to 21 and especially the manufacturing process as claimed in the preceding claim, **characterized in that** one or more transverse conducting structures (49) and optionally at least some of the conducting strands (46) are printed on a substrate before the heating coating (2) has been deposited.

26. The process for manufacturing a windowpane (1) as claimed in either of claims 24 and 25, **characterized in that** the one or more transverse conducting structures (49) are manufactured by screen printing or by inkjet printing.

27. The process for manufacturing a windowpane (1) as claimed in any one of claims 24 to 26, **characterized in that** one or more transverse conducting structures (49) and optionally at least some of the conducting strands (46) are electrically connected to said semiresistive region (6) and optionally connected directly to the heating coating (2), by brazing, at least at discrete contact points.

28. A process for manufacturing a windowpane (1) as claimed in one of claims 1 to 21 and especially the manufacturing process as claimed in one of claims 24 to 27, **characterized in that** the contact points (47) are produced by a mechanical action, especially oscillations intended to transpierce at least one dielectric protective layer (26') on one or more transverse conducting structures (49) and/or at least some of the conducting strands (46).
